# EUROPÄISCHE PATENTSCHRIFT

(11) **EP 1 557 641 B1**
(45) Veröffentlichungstag und Bekanntmachung des Hinweises auf die Patenterteilung: **23.09.2009**
(21) Anmeldenummer: 04001176.9
(22) Anmeldetag: 21.01.2004
(51) Int. Cl.: G01B 21/24

(54) **Verfahren und Messvorrichtung zum Ermitteln der Ausrichtung eines zylindrischen Körpers**
Method and measurement apparatus for determining the orientation of a cylindrical body
Procédé et appareil de mesure pour determiner l'orientation d'un corps cylindrique

(43) Veröffentlichungstag der Anmeldung: 27.07.2005
(73) Patentinhaber: Prüftechnik AG, 85737 Ismaning (DE)
(72) Erfinder: Lysen, Heinrich, 85748 Garching (DE)

(56) Entgegenhaltungen:
- EP-A- 0 928 951
- DE-A- 10 051 870
- DE-A- 19 949 834
- PATENT ABSTRACTS OF JAPAN vol. 1998, no. 11, 30. September 1998 (1998-09-30) & JP 10 160432 A (NIPPON STEEL CORP), 19. Juni 1998 (1998-06-19)

## Beschreibung

Die vorliegende Erfindung betrifft ein Verfahren und eine Vorrichtung zum Ermitteln der Ausrichtung eines zylindrischen Körpers bezüglich einer Referenzrichtung mittels einer Lagemesssonde, die auf die Referenzrichtung geeicht ist und zur Erfassung eines ersten Drehwinkels um eine erste definierte raumfeste Achse und eines zweiten Drehwinkels um eine zweite definierte raumfeste Achse ausgebildet ist.

Eine solche Messvorrichtung bzw. ein solches Messverfahren sind beispielsweise aus der DE 199 49 834 A1 bekannt, wobei mittels der Lagemesssonde in einer ersten Messposition auf der Umfangsfläche des zylindrischen Körpers eine erste Lagemessung durchgeführt wird und in mindestens einer zweiten Messposition auf der Umfangsfläche des Körpers, die sich durch ihren Rotationswinkel in Umfangsrichtung bezüglich der Körperachse von der ersten Messposition unterscheidet, eine zweite Lagemessung durchgeführt wird, und aus den ermittelten Messdaten die Ausrichtung des Körpers bezüglich der Referenzrichtung errechnet wird.

Nachteilig dabei ist, dass dabei zur Ermittlung der Ausrichtung des Körpers zwingend die Messung des Rotationswinkels mit entsprechender Genauigkeit erforderlich ist.

Es ist Aufgabe der vorliegenden Erfindung, ein Verfahren und eine Vorrichtung zum Ermitteln der Ausrichtung eines zylindrischen Körpers zu schaffen, wobei der messtechnische Aufwand geringer gehalten werden soll.

Diese Aufgabe wird erfindungsgemäß gelöst durch ein Verfahren gemäß Anspruch 1 sowie eine Messvorrichtung gemäß Anspruch 15. Dabei ist vorteilhaft, dass dadurch, dass die Lagemesssonde bei der ersten und bei der zweiten Messung jeweils um einen festen Ansetzpunkt verschwenkt wird und die Ausrichtung des Körpers aus dem bei der ersten bzw. der zweiten Messung gewonnenen Verlaufs des ersten und des zweiten Drehwinkels ermittelt wird, keine direkte Darstellung eines dritten Drehwinkels der Sonde erforderlich ist, wodurch der apparative Aufwand verringert werden kann.

Bevorzugte Ausgestaltungen der Erfindung ergeben sich aus den abhängigen Ansprüchen.

Im folgenden wird die Erfindung anhand der beigefügten Zeichnungen beispielhaft näher erläutert. Dabei zeigen:
Fig. 1 eine schematische Darstellung der Bestimmung der Ausrichtung zweier Walzen mittels einer Messvorrichtung gemäß einer ersten Ausführungsform der Erfindung;
Fig. 2 eine schematische Darstellung der Ermittlung der Ausrichtung einer Walze mittels einer Messvorrichtung gemäß einer zweiten Ausführungsform der Erfindung;
Fig. 3 eine Ansicht wie Fig. 2, wobei eine dritte Ausführungsform einer erfindungsgemäßen Messvorrichtung gezeigt wird;
Fig. 4 eine Ansicht wie Fig. 3, wobei eine vierte Ausführungsform einer erfindungsgemäßen Messvorrichtung gezeigt ist; und
Fig. 5 eine beispielhafte Auftragung von Messergebnissen des erfindungsgemäßen Verfahrens.

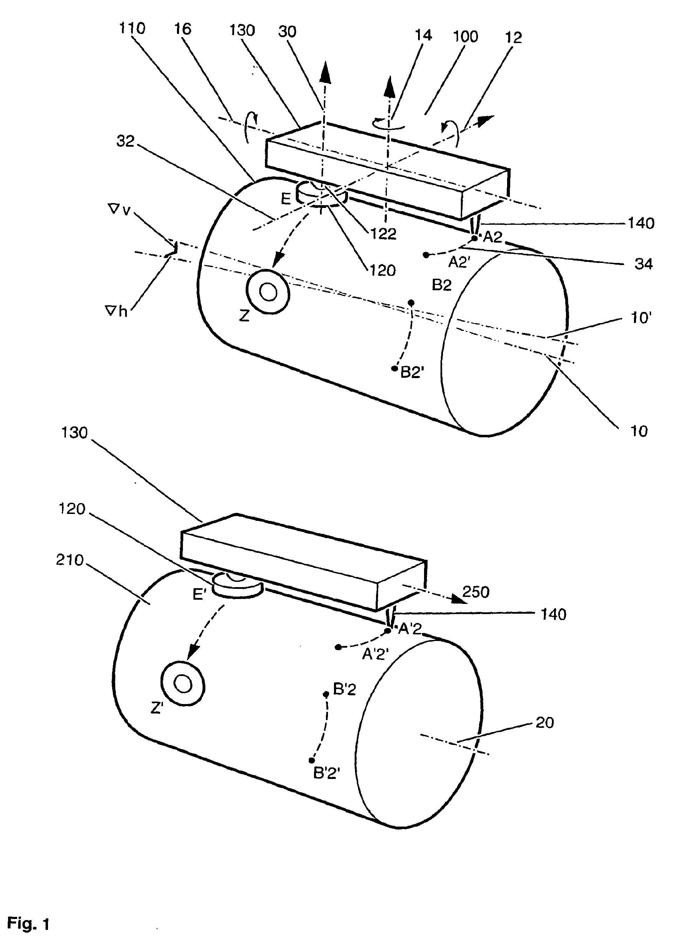

In Fig. 1 ist eine Messvorrichtung 100 gezeigt, die an die Umfangsfläche einer ersten Walze 110, bei welcher es sich beispielsweise um eine Druckwalze handeln kann, angelegt bzw. angesetzt ist.

Die Messvorrichtung 100 umfasst eine Lagemesssonde 130, die an ihrem vorderen Ende einen ersten Ansetzbereich, der von einem Magnetfuß 120 gebildet wird, und an ihrem hinteren Ende einen zweiten Ansetzbereich, der von einer Tastspitze 140 gebildet wird, aufweist. Die Lagemesssonde 130 ist so ausgebildet, dass sie jeweils mittels eines mechanischen oder optischen Kreisels den Drehwinkel der Sonde 130 um eine raumfeste Elevationsachse 12, die also etwa in Querrichtung der Sonde 130 verläuft und im gezeigten Beispiel im wesentlichen senkrecht zu der Walzenlängsachse 10 und tangential zu der Walzenumfangsfläche steht, und um eine dazu senkrecht stehende azimutale Achse 14, die im gezeigten Beispiel im wesentlichen senkrecht zu der Walzenlängsachse 10 und zu der Walzenumfangsfläche steht, erfassen kann. Eine Drehung um die Achse 14 verändert dann den Azimut-Winkel ("Yaw") und eine Drehung um die Achse 12 den Elevations-Winkel ("Pitch").

Die Erfassung des Drehwinkels um eine Achse 16, die in etwa in Längsrichtung der Sonde 130 verläuft und senkrecht zu den Achsen 12 und 14 steht, kann optional erfolgen, falls erforderlich (die Drehung um die Achse 16 gibt den sogenannten "Roll-Winkel an).

In Fig. ist die Messvorrichtung 100 in der Position zu Beginn einer ersten Messung gezeigt. Dabei ist der Magnetfuß 120 in der ersten Messposition E bezüglich der Walzenumfangsfläche festgelegt, während die Tastspitze 140 an einem Punkt A2 auf der Walzenumfangsfläche angesetzt ist. Die Sonde 130 ist bezüglich des Magnetfußes 120 so gelagert, dass sie um eine Achse 30, die in der gezeigten Messposition im wesentlichen parallel zu der Achse 14 ist, sowie wie um eine dazu senkrechte Achse 32, die in der gezeigten Messposition im wesentlichen parallel zu der Achse 12 ist, bezüglich des Magnetfußes drehbar ist.

Der Magnetfuß 120 und die Tastspitze 140 sind so dimensioniert, dass die Sonde 130 nicht um die Achse 12 bezüglich der Walze 110 bzw. der Walzenlängsachse 10 verkippt ist, d.h. die Sonde 130 soll möglichst exakt parallel zu der Walzenoberfläche liegen. Ferner liegt die Längsachse 16 der Sonde 130 vorzugsweise annähernd parallel zu der Walzenachse 10, d.h. die Verbindungslinie zwischen dem Magnetfuß 120 und der Tastspitze 140 liegt annähernd parallel zu der Walzenachse 10.

Die erste Messung wird ausgeführt, indem die Tastspitze 140 ausgehend von dem Auflagepunkt A2 in Kontakt mit der Walzenumfangsfläche manuell zu dem Auflagepunkt A2' verschoben wird, wobei die Sonde 130 um die Achse 30 bezüglich des Magnetfußes 120 verschwenkt wird. In Fig. 1 ist die Bewegungslinie der Tastspitze 140 auf der Walzenumfangsfläche bei der ersten Messung mit dem Bezugszeichen 34 bezeichnet. Vorzugsweise sind die Punkte A2 und A2' so gewählt, dass dann, wenn sich die Tastspitze 140 in der Mitte zwischen den beiden Punkten befindet, die Sonde 130 exakt parallel zu der Walzenachse 10 ist.

Während der gesamten Schwenkbewegung von A2 nach A2' wird der Verlauf der Drehwinkel um die Achsen 12 und 14 (Pitch- bzw. Yaw-Winkel) aufgezeichnet. Der Aufzeichnungsvorgang kann dabei mittels einer Detektoreinrichtung gestartet bzw. gestoppt werden, die beispielsweise die Andrückkraft der Tastspitze 140 auf die Walzenumfangsfläche oder das Bestehen eines von der Walzenumfangsfläche vermittelten elektrischen Kontakts zwischen dem Magnetfuß 120 und der Tastspitze 140 erfasst.

Anschließend wird der Magnetfuß 120 gelöst und die Messvorrichtung 100 wird in eine Position gebracht, in welcher der Magnetfuß 120 in der Position Z an der Walzenumfangsfläche festgelegt wird, während die Tastspitze 140 in die Startposition B2 gebracht wird. Nun kann mit der zweiten Messung begonnen werden, bei welcher die Tastspitze 140 analog zur ersten Messung aus der Position B2 in Kontakt mit der Walzenumfangsfläche manuell in die Position B2' gebracht wird, in welcher die zweite Messung beendet wird. Dabei wird analog zur ersten Messung der Verlauf des Pitch- und des Yaw-Winkels während der Bewegung der Tastspitze 140 zwischen den Punkten B2 und B2' durchgehend erfasst. Analog zur ersten Messung erfolgt dabei eine Verschwenkung der Sonde 130 um die Lagerachse 30. Der Magnetfuß 120 ist dabei vorzugsweise so ausgebildet, dass die Achse 30 um die Achse 16 so verschwenkt werden kann, dass die Achse 30 bei der zweiten Messung zumindest annähernd parallel zu der Orientierung der Achse 30 bei der ersten Messung steht, z.B. indem das Lager als Kugellager ausgebildet ist. Eine Kontrolle der Orientierung der Schwenkachse 30 könnte beispielsweise mittels eines Pendelgewichts oder einer Wasserwaage, das bzw. die an der Sonde 130 vorgesehen ist (nicht gezeigt), erfolgen.

Ziel der Messungen ist es, die Ausrichtung der Walzenachse 10 bezüglich einer Referenzrichtung 10', d.h. die horizontale Abweichung Δh und die vertikale Abweichung Δv der Walzenachse 10 bezüglich der Referenzrichtung 10', zu ermitteln. Zu diesem Zweck ist die Sonde 130 auf die Referenzrichtung 10' geeicht, d.h. sie misst den Pitch- und den Yaw-Winkel als Abweichung von der Referenzrichtung.

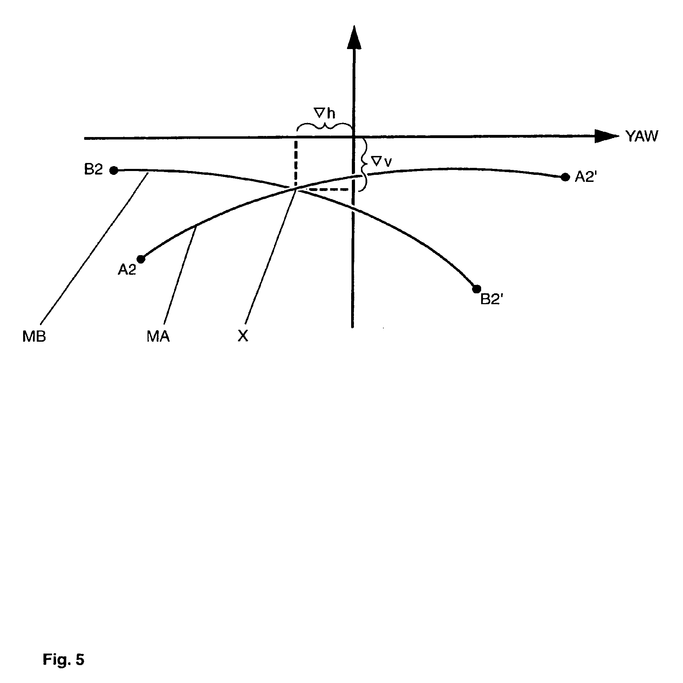

In Fig. 5 ist beispielhaft das Ergebnis des oben geschilderten Messvorgangs gezeigt, wobei sowohl für die erste Messung als auch für die zweite Messung der gemessene Pitch-Winkel als Funktion des gemessenen Yaw-Winkels aufgetragen ist. Die Kurven der ersten und der zweiten Messung sind dabei mit MA bzw. MB bezeichnet. Für beide Messungen ergibt sich jeweils ein Kreisbogen, dessen Radius identisch ist und dessen Mittelpunkt jedoch entsprechend dem unterschiedlichen Roll-Winkel der Positionen E und Z unterschiedlich liegt. Auf diese Weise ergibt sich ein Schnittpunkt X der beiden Kurven, aus dessen Koordinaten Δh und Δv direkt der entsprechende Horizontal- bzw. Vertikalversatz der Walzenachse 10 bezüglich der Referenzrichtung 10' abgelesen werden kann. Eine Messung des Rollwinkels (Drehung der Sonde um die Achse 16) ist dabei nicht erforderlich. Dies gilt insbesondere dann, wenn der Rollwinkel während der ersten und der zweiten Messung konstant gehalten wird.

Bei der Auswertung der Messkurven gemäß Fig. 5 ist es zweckmäßig, aus den Messwerten der ersten bzw. der zweiten Messung durch Kurvenanpassung jeweils eine Ausgleichsfunktion zu ermitteln, wobei die Ermittlung von Δh und Δv aus dem Schnittpunkt dieser Ausgleichsfunktionen ermittelt wird.

In Fig. 1 ist ferner angedeutet, dass die Sonde 130 nach der Bestimmung der Ausrichtung der ersten Walze 110 in analoger Weise an eine zweite Walze 210 angelegt werden kann, um deren Ausrichtung bezüglich der Referenzrichtung 10' oder einer anderen Referenzrichtung zu bestimmen (im letzteren Fall muss die Eichung der Sonde 130 vor der Messung entsprechend geändert werden). Für den Fall, dass die zweite Walze 210 parallel zu der ersten Walze 110 ausgerichtet werden soll, ist es zweckmäßig, dass die ermittelte Ausrichtung der ersten Walze 110 als Referenzrichtung für die Ausrichtungsmessung der zweiten Walze 210 verwendet wird.

In der Darstellung von Fig. 1 sind die entsprechenden Messpositionen an der zweiten Walze 210 mit dem gleichen Buchstaben wie bei der ersten Walze 110 bezeichnet, wobei der Buchstabe jedoch mit einem Strich versehen ist.

Zusätzlich zu der Ermittlung der Fehlausrichtung bezüglich einer Referenzrichtung kann das beschriebene Messverfahren beispielsweise auch verwendet werden, um aus den Radien der Kreisbögen MA und MB den Walzenradius zu bestimmen. Wenn ferner statt den bisher beschriebenen zwei Messungen an einer Walze eine dritte analoge Messung bei einem dritten Rollwinkel durchgeführt wird, womit gegebenenfalls eine Konizität bzw. Bombierung der Walze bestimmt werden kann.

Wenn sich der Rollwinkel bei den Messungen nur geringfügig ändert, kann der entsprechende Skalenfaktorfehler der Sonde 130 für diesen Winkel relativ groß sein.

Ferner kann bei dem erfindungsgemäßen Verfahren sehr schnell von einer Walze auf die andere gewechselt werden, was die Anforderungen an die Stabilität der Kreisel verringert.

Eine Vermessung mehrerer Walzen kann im Pilgerschrittverfahren erfolgen.

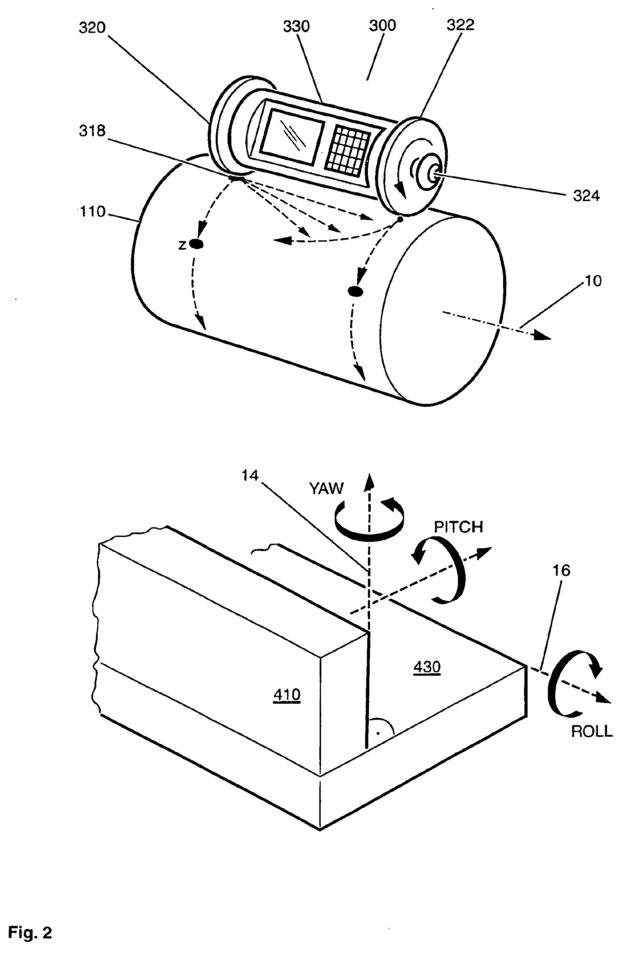

Die Eichung der Sonde 130 auf die Referenzrichtung 10' kann beispielsweise dadurch erfolgen, dass die Sonde 130 vor der ersten Messung an eine entsprechende feststehende Referenzflächenkombination 410, 430, wie sie in Fig. 2 schematisch angedeutet ist, angelegt wird.

In Fig. 2 ist eine zweite Ausführungsform einer Messvorrichtung 300 gezeigt, bei welcher die Sonde 330 statt mit einer Tastspitze mit einer Kreisscheibe 322 als Ansetzbereich versehen ist. Mit 324 ist ein Handgriff für die manuelle Verschwenkung der Sonde 330 während der ersten und der zweiten Messung bezeichnet. Die Kreisscheibe 322 kann dabei bezüglich der Sonde 330 feststehend ausgebildet sein und wirkt in diesem Fall als kreisförmig gekrümmte Schneide, die bei der Messung einen Punktkontakt mit der Walzenumfangsfläche bildet. Beim manuellen Verschwenken der Sonde 330 während der Messung gleitet die Scheibe 322 dabei auf der Walzenumfangsfläche. Der vordere Auflagepunkt 318 der Sonde 330 ist dabei wie bei der vorhergehenden Ausführungsform während jeder einzelnen Messung feststehend und dient als Schwenkpunkt.

Statt feststehend bezüglich der Sonde 330 zu sein, kann die Kreisscheibe 322 auch drehbar bezüglich der Sonde 330 gelagert sein und in diesem Fall als Rad wirken, welches beim Verschwenken der Sonde 330 um den vorderen Auflagepunkt 318 während jeder Messung auf der Walzenumfangsfläche abrollt.

Falls dies gewünscht ist, kann auch das vordere Ende der Sonde 330 mit einer Kreisscheibe 320 versehen sein, die auf ihrem Umfang den während der jeweiligen Messung stationären Ansetzpunkt 318 bildet. Bei einer solchen Ausgestaltung der Messvorrichtung 300 ist es möglich, die Sonde 330 auf der Walzenumfangsfläche um die Walzenachse 10 abzurollen, um die Sonde 330 von der ersten Messposition in die zweite Messposition zu bringen. In diesem Fall muss jedoch eine Erfassung des Roll-Winkels erfolgen, um die Messergebnisse auszuwerten. Falls eine Erfassung des Rollwinkels vermieden werden soll, dürfte die Sonde 330 nicht auf der Walzenumfangsfläche abrollen, sondern müsste mittels Abrutschen der Kreisscheiben 320, 322 auf der Walzenumfangsfläche so aus der ersten in die zweite Messposition gebracht werden, dass dabei keine Rollbewegung der Sonde 330, d.h. keine Drehung um die Längsachse der Sonde 330, stattfindet.

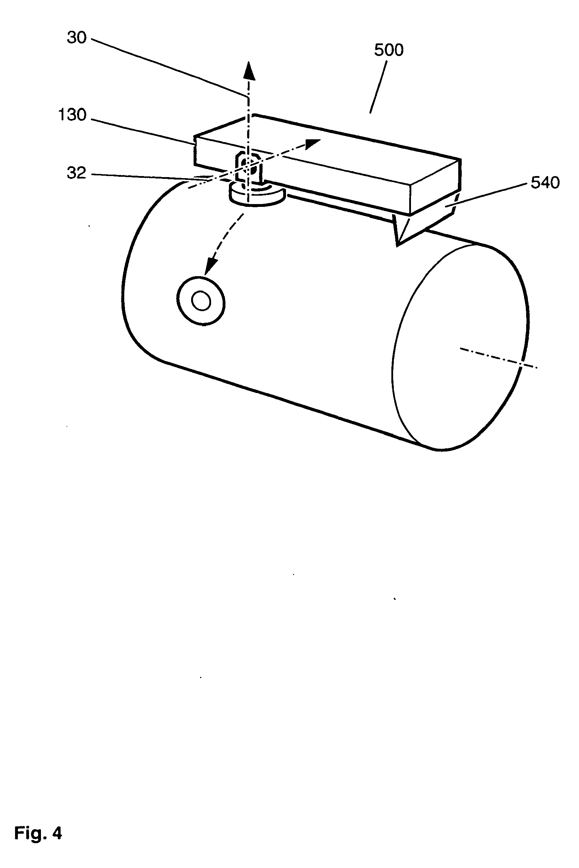

In Fig. 4 ist schließlich eine Abwandlung der Ausführungsform von Fig. 1 gezeigt, wobei die Tastspitze 140 durch eine gerade Schneide 540 ersetzt ist, die an einem Punkt auf der Walzenumfangsfläche aufliegt. Bei jeder Messung wird die Schneide 540 manuell in Kontakt mit der Walzenumfangsfläche über die Walzenumfangsfläche geschoben, wodurch die Sonde 130 um den Magnetschuh 120 bzw. die Achse 30 verschwenkt wird. Wenn die Achse 30 nicht seitlich kippbar ist, ändert sich bei jeder Messung nur der Yaw-Winkel, nicht jedoch der Pitch-Winkel. Somit ergibt bei jeder Messung in der Darstellung von Fig. 5 eine Gerade, wobei diese zu der bei einem anderen Roll-Winkel gemessen Geraden versetzt ist, da der Pitch-Winkel bei jeder Messung vom Roll-Winkel abhängt. Damit sich die Geraden schneiden, ist zur Ermittlung der Fehlausrichtung die Auswertung des Roll-Winkels in diesem Falle zwingend erforderlich.

Statt wie in Fig. 4 gerade ausgebildet zu sein, kann die Schneide 540 auch gekrümmt, beispielsweise kreisbogenförmig gekrümmt, ausgebildet sein.

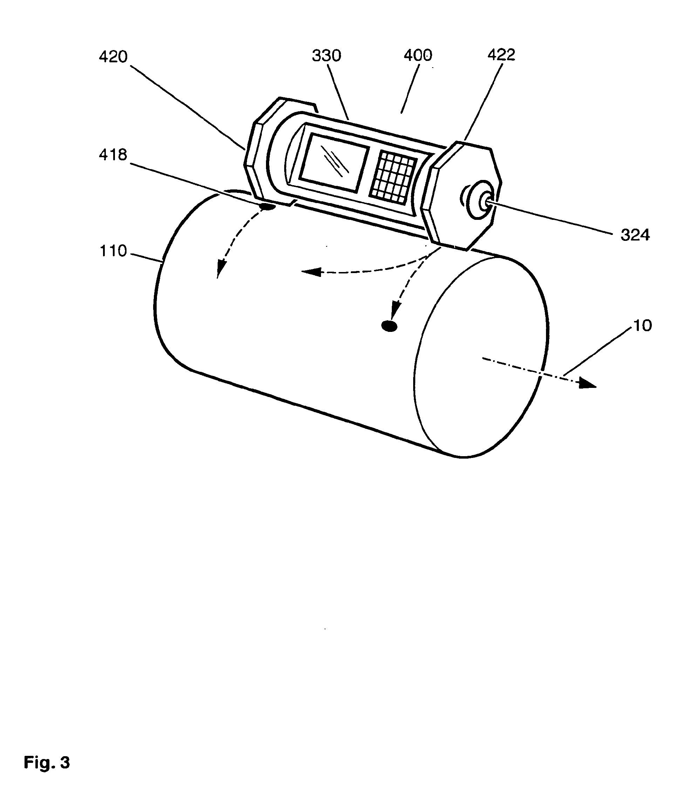

Eine abgewandelte Ausführungsform des Prinzips von Fig. 2 ist in Fig. 3 dargestellt, wo die beiden Kreisscheiben 320, 322 durch eine entsprechende Scheibe 420, 422 mit polygonalem Außenumfang ersetzt sind. Der jeweilige gerade Abschnitt des Polygons, mit welchem die hintere Scheibe 422 auf der Walzenumfangsfläche aufgesetzt ist, wird dabei manuell bei der jeweiligen Messung in Kontakt mit der Walzenumfangsfläche über die Walzenumfangsfläche geschoben, wobei die Sonde 330 um den vorderen Auflagepunkt 418 verschwenkt wird. Sofern bei jeder Messung der gleiche Abschnitt des Polygons verwendet wird, entspricht dies funktional der Ausführungsform von Fig. 4. Insbesondere können aber für unterschiedliche Messungen die unterschiedlichen Abschnitte des Polygons verwendet werden, um einen Rollwinkeleinfluss gering zu halten.

Grundsätzlich kann bei allen Ausführungsformender vordere Ansetz- bzw. Anlagepunkt der Sonde an der Walzenumfangsfläche auch so ausgebildet sein, dass während des Verschwenkens des hinteren Ansetz- bzw. Anlagepunkts eine gewisse Verkippung der Sonde, d.h. eine Änderung des Rollwinkels der Sonde, erlaubt ist. In diesem Fall muss jedoch der Rollwinkel bzw. dessen Änderung mit erfasst werden, um eine zuverlässige Auswertung der Messergebnisse des Pitch- und Yaw-Winkels zu ermöglichen.

Bei der ersten und der zweiten Messung wird der Schwenkwinkelbereich des hinteren Ansetzpunkts um den vorderen Ansetzpunkt so gewählt, dass eine hinreichend große Zahl von Messwertepaaren (Pitch-Winkel, Yaw-Winkel) gewonnen wird, um eine zuverlässige Kurvenanpassung und damit eine zuverlässige Ermittlung des Schnittpunkts der Kurven zu ermöglichen. Zweckmäßigerweise beträgt der Schwenkwinkel mindestens 10°.

Zur Auswertung der Messwerte bzw. zur Ermittlung der Ausrichtung der zu vermessenden Walze ist die Messvorrichtung mit einer entsprechenden Auswerteeinheit versehen, die in den Figuren jedoch nicht separat dargestellt ist.

Falls die Achsen 12, 14, 16 nicht zumindest annähernd mit den entsprechenden Symmetrieachsen der Sonde zusammenfallen, ist die Messung des Rollwinkels der Sonde erforderlich, um mittels einer geeigneten Koordinatentransformation aus den direkt von der Sonde gemessenen Werten der Drehwinkel um die sondenfesten Achsen die Drehwinkel um die raumfesten Achsen 12, 14, 16 zu bestimmen.

## Patentansprüche

1. Verfahren zum Ermitteln der Ausrichtung eines zylindrischen Körpers (110, 210) bezüglich einer Referenzrichtung (10') mittels einer Messvorrichtung (100, 300, 400, 500), die einen ersten (120, 320, 420) und einen zweiten Ansetzbereich (140, 322, 422, 540) und eine Lagemesssonde (130, 330) aufweist, die auf die Referenzrichtung geeicht ist und zur Erfassung eines ersten Drehwinkels der Sonde um eine erste raumfeste Achse (12) und eines zweiten Drehwinkels der Sonde um eine zweite raumfeste Achse (14) ausgebildet ist,
wobei eine erste Messung durchgeführt wird, bei welcher die Sonde mit dem ersten und dem zweiten Ansetzbereich auf der Umfangsfläche des Körpers angesetzt wird, wobei der erste Ansetzbereich eine erste Messposition (E, E') einnimmt, in welcher er bezüglich der Körperumfangsfläche festgehalten wird, während der zweite Ansetzbereich in Kontakt mit der Körperumfangsfläche bezüglich des ersten Ansetzbereichs verschwenkt wird und dabei der Verlauf des ersten und des zweiten Drehwinkels erfasst wird,
und anschließend eine zweite Messung durchgeführt wird, bei welcher die Sonde mit dem ersten und dem zweiten Ansetzbereich auf der Umfangsfläche des Körpers angesetzt wird, wobei der erste Ansetzbereich eine zweite Messposition (Z, Z') einnimmt, die bezüglich der ersten Messposition des ersten Ansetzbereichs in Umfangsrichtung versetzt ist und in welcher er bezüglich der Körperumfangsfläche festgehalten wird, während der zweite Ansetzbereich in Kontakt mit der Körperumfangsfläche bezüglich des ersten Ansetzbereichs verschwenkt wird und dabei der Verlauf des ersten und des zweiten Drehwinkels erfasst wird,
und wobei aus dem Vergleich des bei der ersten Messung gewonnen Verlaufs (MA) des ersten und des zweiten Drehwinkels und des bei der zweiten Messung gewonnen Verlaufs (MB) ersten und des zweiten Drehwinkels die Ausrichtung des Körpers bezüglich der Referenzrichtung ermittelt wird.

2. Verfahren gemäß Anspruch 1, **dadurch gekennzeichnet, dass** die erste Achse (12) zu der zweiten Achse (14) senkrecht ist.

3. Verfahren gemäß Anspruch 2; **dadurch gekennzeichnet, dass** die erste (12) und die zweite Achse (14) so liegen, dass es sich, wenn die Sonde (130, 330) horizontal ausgerichtet ist, bei dem ersten Drehwinkel um den Elevations-Winkel (Pitch-Winkel) und bei dem zweiten Drehwinkel um den Azimut-Winkel (Yaw-Winkel) handelt.

4. Verfahren gemäß einem der vorhergehenden Ansprüche, **dadurch gekennzeichnet, dass** bei der Auswertung für die erste und die zweite Messung jeweils der erste Drehwinkel als Funktion des zweiten Drehwinkels oder umgekehrt dargestellt wird und die Abweichung der Ausrichtung des Körpers von der Referenzrichtung aus dem Schnittpunkt (X) der Kurve (MA) der ersten Messung mit der entsprechenden Kurve (MB) der zweiten Messung ermittelt wird.

5. Verfahren gemäß Anspruch 4, **dadurch gekennzeichnet, dass** aus den Messwerten der ersten bzw. der zweiten Messung durch Kurvenanpassung jeweils eine Ausgleichsfunktion ermittelt wird, wobei die Abweichung der Ausrichtung des Körpers von der Referenzrichtung aus dem Schnittpunkt dieser Ausgleichsfunktionen ermittelt wird.

6. Verfahren gemäß einem der vorhergehenden Ansprüche, **dadurch gekennzeichnet, dass** die erste und die zweite Messung über einen Schwenkwinkelbereich des zweiten Ansetzbereichs (140, 322, 422, 540) bezüglich des ersten Ansetzbereichs (120, 320, 420) von mindestens 10 Grad ausgeführt wird.

7. Verfahren gemäß einem der vorhergehenden Ansprüche, **dadurch gekennzeichnet, dass** bei der zweiten Messung die Messsonde (130, 330) sowohl in der Anfangsstellung als auch in der Endstellung im wesentlichen parallel zu den entsprechenden Positionen bei der ersten Messung ist.

8. Verfahren gemäß einem der vorhergehenden Ansprüche, **dadurch gekennzeichnet, dass** die Sonde (130, 330) während der ersten bzw. der zweiten Messung im wesentlichen so ausgerichtet ist, dass die Verbindungslinie zwischen dem ersten und dem zweiten Ansetzbereich im wesentlichen parallel zu der Längsachse (10, 20) des Körpers (110, 210) ausgerichtet ist.

9. Verfahren gemäß einem der vorhergehenden Ansprüche, **dadurch gekennzeichnet, dass** der zweite Ansetzbereich als Spitze (140) ausgebildet ist, die bei der ersten und der zweiten Messung in Kontakt mit der Körperumfangsfläche manuell über die Körperumfangsfläche geschoben wird.

10. Verfahren gemäß einem der Ansprüche 1 bis 8, **dadurch gekennzeichnet, dass** der zweite Ansetzbereich als Rad (322) ausgebildet ist, das bezüglich der Sonde (330) drehbar gelagert ist und tangential bezüglich der Schwenkbewegung des zweiten Ansetzbereichs relativ zum ersten Ansetzbereich (320) steht, wobei das Rad bei der ersten und der zweiten Messung auf der Körperumfangsfläche manuell abgerollt wird.

11. Verfahren gemäß einem der Ansprüche 1 bis 8, **dadurch gekennzeichnet, dass** der zweite Ansetzbereich als Schneide (322, 540) ausgebildet ist, die tangential bezüglich der Schwenkbewegung des zweiten Ansetzbereichs relativ zum ersten Ansetzbereich (120, 320) steht, wobei die Schneide bei der ersten und der zweiten Messung in Kontakt mit der Körperumfangsfläche manuell über die Körperumfangsfläche geschoben wird.

12. Verfahren gemäß Anspruch 11, **dadurch gekennzeichnet, dass** die Schneide (540) eben oder als Polygonzug ausgebildet ist.

13. Verfahren gemäß Anspruch 11, **dadurch gekennzeichnet, dass** die Schneide (540, 322) gekrümmt, insbesondere kreisförmig bzw. kreisbogenförmig gekrümmt, ausgebildet ist.

14. Verfahren gemäß einem der vorhergehenden Ansprüche, **dadurch gekennzeichnet, dass** eine Detektoreinrichtung vorgesehen ist, um zu erfassen, wenn der zweite Ansetzbereich (140, 322, 422, 540) in Kontakt mit der Körperumfangsfläche steht, in welchem Fall Messwerte für den Verlauf des ersten und des zweiten Drehwinkels aufgenommen werden.

15. Messvorrichtung zum Ermitteln der Ausrichtung eines zylindrischen Körpers **(110, 210)** bezüglich einer Referenzrichtung **(10'),** mit einer Lagemesssonde **(130, 330),** die auf die Referenzrichtung geeicht ist und zur Erfassung eines ersten Drehwinkels der Sonde um eine erste raumfeste Achse **(12)** und eines zweiten Drehwinkels der Sonde um eine zweite raumfeste Achse **(14)** ausgebildet ist, sowie einem ersten Ansetzbereich **(120, 320, 420)** und einem zweiten Ansetzbereich **(140, 322, 422, 540)** zum Ansetzen der Sonde auf der Umfangsfläche des Körpers, sowie einer Auswerteeinheit,
wobei der erste und der zweite Ansetzbereich so ausgebildet sind, dass der erste Ansetzbereich für eine erste Messung nach dem Ansetzen in eine erste, während dieser Messung stationären Messposition (E, E') bringbar ist, wohingegen der zweite Ansetzbereich während dieser Messung in Kontakt mit der Körperumfangsfläche bringbar und bezüglich des ersten Ansetzbereichs verschwenkbar ist,
und wobei der erste Ansetzbereich für eine zweite Messung in eine zweite, während dieser zweiten Messung stationären Messposition (Z, Z') bringbar ist, die bezüglich der ersten Messposition des ersten Ansetzbereichs in Umfangsrichtung versetzt ist wohingegen auch während dieser zweiten Messung der zweite Ansetzbereich in Kontakt mit der Körperumfangsfläche bringbar und bezüglich des ersten Ansetzbereichs verschwenkbar ist,
und
wobei die Auswerteeinheit so ausgebildet ist, dass sie während der ersten und der zweiten Messung den Verlauf des ersten und des zweiten Drehwinkels erfasst und aus dem Vergleich des bei der ersten Messung gewonnen Verlaufs (MA) des ersten und des zweiten Drehwinkels und des bei der zweiten Messung gewonnen Verlaufs (MB) des ersten und des zweiten Drehwinkels die Ausrichtung des Körpers bezüglich der Referenzrichtung ermittelt.

16. Vorrichtung gemäß Anspruch 15, **dadurch gekennzeichnet, dass** der erste Ansetzbereich einen an der Körperumfangsfläche lösbar anbringbaren Fuß (120) aufweist, der bezüglich der Sonde (130, 330) um zwei senkrecht zueinander stehende Achsen (30, 32) schwenkbar ist.

17. Vorrichtung gemäß Anspruch 16, **dadurch gekennzeichnet, dass** die erste Schwenkachse (30) des Fußes (120) senkrecht zu der Körperumfangsfläche steht und die zweite Schwenkachse (32) des Fußes senkrecht zu der Verbindungslinie zwischen dem ersten und dem zweiten Ansetzbereich (140, 540) steht.

18. Vorrichtung gemäß einem der Ansprüche 15 bis 17, **dadurch gekennzeichnet, dass** die Sonde für jede Drehwinkelachse (12, 14, 16) einen mechanischen oder optischen Kreisel aufweist.

## Claims

1. Method for determining the alignment of a cylindrical body (110, 210) with respect to a reference direction (10') by means of a measurement apparatus (100, 300, 400, 500), which has a first contact area (120, 320, 420) and a second contact area (140, 322, 422, 540) and a position measurement probe (130, 330), which is calibrated with respect to the reference direction and is designed to detect a first rotation angle of the probe about a first spatially fixed axis (12), and a second rotation angle of the probe about a second spatially fixed axis (14),
with a first measurement being carried out, in which the first and the second contact areas of the probe make contact with the circumferential surface of the body, with the first contact area assuming a first measurement position (E, E') in which it is held firmly with respect to the body circumferential surface, while the second contact area is pivoted with respect to the first contact area into contact with the body circumferential surface, and the profile of the first and of the second rotation angles is detected in the process,
and a second measurement is then carried out, in which the first and the second contact areas of the probe make contact with the circumferential surface of the body, with the first contact area assuming a second measurement position (Z, Z'), which is offset in the circumferential direction with respect to the first measurement position of the first contact area, and in which it is held firmly with respect to the body circumferential surface, while the second contact area is pivoted with respect to the first contact area into contact with the body circumferential surface, and the profile of the first and of the second rotation angles is detected in the process,
and with the alignment of the body with respect to the reference direction being determined from the comparison of the profile (MA), obtained in the first measurement, of the first and of the second rotation angles and of the profile (MB), obtained during the second measurement, of the first and the second rotation angles.

2. Method according to Claim 1, **characterized in that** the first axis (12) is at right angles to the second axis (14).

3. Method according to Claim 2, **characterized in that** the first axis (12) and the second axis (14) are located such that, when the probe (130, 330) is aligned horizontally, the first rotation angle is the elevation angle (pitch angle), and the second rotation angle is the azimuth angle (yaw angle).

4. Method according to one of the preceding claims, **characterized in that** the first rotation angle is in each case represented as a function of the second rotation angle, or vice versa, in the evaluation of the first and the second measurement, and the discrepancy in the alignment of the body from the reference direction is determined from the intersection (X) of the curve (MA) of the first measurement with the corresponding curve (MB) of the second measurement.

5. Method according to Claim 4, **characterized in that** a compensation function is in each case determined from the measured values of the first and the second measurement, by curve matching, with the discrepancy in the alignment of the body from the reference direction being determined from the intersection of these compensation functions.

6. Method according to one of the preceding claims, **characterized in that** the first and the second measurement are carried out over a pivoting angle range of the second contact area (140, 322, 422, 540) with respect to the first contact area (120, 320, 420) of at least 10 degrees.

7. Method according to one of the preceding claims, **characterized in that**, in the second measurement, the measurement probe (130, 330) is essentially parallel to the corresponding positions in the first measurement, both in the initial position and in the final position.

8. Method according to one of the preceding claims, **characterized in that** the probe (130, 330) is essentially aligned during the first and the second measurement such that the connecting line between the first and the second contact area is aligned essentially parallel to the longitudinal axis (10, 20) of the body (110, 210).

9. Method according to one of the preceding claims, **characterized in that** the second contact area is in the form of a point (140) which is shifted manually over the body circumferential surface, in contact with the body circumferential surface, during the first and the second measurement.

10. Method according to one of Claims 1 to 8, **characterized in that** the second contact area is in the form of a wheel (322), which is mounted such that it can rotate with respect to the probe (330) and is tangential with respect to the pivoting movement of the second contact area relative to the first contact area (320), with the wheel being rolled manually on the body circumferential surface during the first and the second measurement.

11. Method according to one of Claims 1 to 8, **characterized in that** the second contact area is in the form of a blade (322, 540), which is tangential with respect to the pivoting movement of the second contact area relative to the first contact area (120, 320), with the blade being moved manually over the body circumferential surface, in contact with the body circumferential surface, during the first and the second measurement.

12. Method according to Claim 11, **characterized in that** the blade (540) is planar or in the form of a polygonal train.

13. Method according to Claim 11, **characterized in that** the blade (540, 322) is curved, in particular circular or curved in the form of a circular arc.

14. Method according to one of the preceding claims, **characterized in that** a detector device is provided, in order to detect when the second contact area (140, 322, 422, 540) is in contact with the body circumferential surface, in which case measured values are recorded for the profile of the first and of the second rotation angle.

15. Measurement device for determining the alignment of a cylindrical body (110, 210) with respect to a reference direction (10'), having a position measurement probe (130, 330) which is calibrated with respect to the reference direction and is designed to detect a first rotation angle of the probe about a first spatially fixed axis (12) and a second rotation angle of the probe about a second spatially fixed axis (14), as well as a first contact area (120, 320, 420) and a second contact area (140, 322, 422, 540) for the probe to make contact with the circumferential surface of the body, as well as an evaluation unit,
with the first and the second contact areas being designed such that, for a first measurement and after making contact, the first contact area can be moved to a first measurement position (E, E'), which is stationary during this measurement, while in contrast the second contact area can be brought into contact with the body circumferential surface during this measurement, and can be pivoted with respect to the first contact area,
and, for a second measurement, the first contact area can be moved to a second measurement position (Z, Z'), which is stationary during this second measurement, and is offset in the circumferential direction with respect to the first measurement position of the first contact area,
while in contrast the second contact area can also be brought into contact with the body circumferential surface during this second measurement, and can be pivoted with respect to the first contact area,
and
with the evaluation unit being designed such that it records the profile of the first and of the second rotation angles during the first and the second measurements and determines the alignment of the body with respect to the reference direction from the comparison of the profile (MA), obtained during the first measurement, of the first and second rotation angles and the profile (MB), obtained during the second measurement, of the first and the second rotation angles.

16. Apparatus according to Claim 15, **characterized in that** the first contact area has a foot (120) which can be detachably fitted to the body circumferential surface and can be pivoted with respect to the probe (130, 330) about two mutually perpendicular axes (30, 32).

17. Apparatus according to Claim 16, **characterized in that** the first pivoting axis (30) of the foot (120) is at right angles to the body circumferential surface, and the second pivoting axis (32) of the foot is at right angles to the connecting line between the first and the second contact areas (140, 540).

18. Apparatus according to one of Claims 15 to 17, **characterized in that** the probe has a mechanical or optical gyro for each rotation angle axis (12, 14, 16).

## Revendications

1. Procédé pour déterminer l'orientation d'un corps cylindrique (110, 210) par rapport à une direction de référence (10') au moyen d'un dispositif de mesure (100, 300, 400, 500), qui présente une première (120, 320, 420) et une deuxième région d'application (140, 322, 422, 540) et une sonde de mesure de position (130, 330), qui est calibrée sur la direction de référence et qui est réalisée pour détecter un premier angle de rotation de la sonde autour d'un premier axe fixe (12) et un deuxième angle de rotation de la sonde autour d'un deuxième axe fixe (14),
une première mesure étant effectuée, à laquelle la sonde avec la première et la deuxième région d'application est appliquée sur la région périphérique du corps, la première région d'application adoptant une première position de mesure (E, E'), dans laquelle elle est maintenue fixement par rapport à la surface périphérique du corps, tandis que la deuxième région d'application est pivotée par rapport à la première région d'application en contact avec la surface périphérique du corps, la progression du premier et du deuxième angle de rotation étant ainsi détectées,
et ensuite une deuxième mesure étant effectuée, durant laquelle la sonde avec la première et la deuxième région d'application est appliquée sur la surface périphérique du corps, la première région d'application adoptant une deuxième position de mesure (Z, Z'), qui est décalée dans la direction périphérique par rapport à la première position de mesure de la première région d'application, et dans laquelle elle est maintenue fixement par rapport à la surface périphérique du corps, tandis que la deuxième région d'application est pivotée par rapport à la première région d'application en contact avec la surface périphérique du corps, la progression du premier et du deuxième angle de rotation étant ainsi détectées,
et l'orientation du corps par rapport à la direction de référence étant déterminée à partir de la comparaison de la progression (MA) du premier et du deuxième angle de rotation obtenue lors de la première mesure, et de la progression (MB) du premier et du deuxième angle de rotation obtenue lors de la deuxième mesure.

2. Procédé selon la revendication 1, **caractérisé en ce que** le premier axe (12) est perpendiculaire au deuxième axe (14).

3. Procédé selon la revendication 2, **caractérisé en ce que** le premier (12) et le deuxième (14) axe sont situés de telle sorte que lorsque la sonde (130, 330) est orientée horizontalement, le premier angle de rotation soit l'angle d'élévation (angle de pas) et le deuxième angle de rotation soit l'angle d'azimut (angle de lacet).

4. Procédé selon l'une quelconque des revendications précédentes, **caractérisé en ce que** lors de l'analyse pour la première et la deuxième mesure, le premier angle de rotation est à chaque fois établi comme une fonction du deuxième angle de rotation ou inversement, et l'écart d'orientation du corps de la direction de référence est déterminé à partir du point d'intersection (X) de la courbe (MA) de la première mesure avec la courbe correspondante (MB) de la deuxième mesure.

5. Procédé selon la revendication 4, **caractérisé en ce que** l'on détermine à partir des valeurs de mesure de la première ou de la deuxième mesure, par adaptation des courbes, à chaque fois une fonction d'égalisation, l'écart d'orientation du corps de la direction de référence étant déterminé à partir du point d'intersection de ces fonctions d'égalisation.

6. Procédé selon l'une quelconque des revendications précédentes, **caractérisé en ce que** la première et la deuxième mesure sont effectuées sur une plage d'angle de pivotement de la deuxième région d'application (140, 322, 422, 540) par rapport à la première région d'application (120, 320, 420) d'au moins 10 degrés.

7. Procédé selon l'une quelconque des revendications précédentes, **caractérisé en ce que** lors de la deuxième mesure, la sonde de mesure (130, 330), à la fois dans la position de départ et dans la position terminale, est essentiellement parallèle aux positions correspondantes lors de la première mesure.

8. Procédé selon l'une quelconque des revendications précédentes, **caractérisé en ce que** la sonde (130, 330) pendant la première ou la deuxième mesure est orientée essentiellement de telle sorte que la ligne de connexion entre la première et la deuxième région d'application soit orientée essentiellement parallèlement à l'axe longitudinal (10, 20) du corps (110, 210).

9. Procédé selon l'une quelconque des revendications précédentes, **caractérisé en ce que** la deuxième région d'application est réalisée sous forme de pointe (140) qui, lors de la première et de la deuxième mesure, est poussée en contact avec la surface périphérique du corps, de manière manuelle sur la surface périphérique du corps.

10. Procédé selon l'une quelconque des revendications 1 à 8, **caractérisé en ce que** la deuxième région d'application est réalisée sous forme de roue (322) qui est montée de manière rotative par rapport à la sonde (330) et qui est tangentielle par rapport au mouvement de pivotement de la deuxième région d'application par rapport à la première région d'application (320), la roue étant roulée manuellement sur la surface périphérique du corps lors de la première et de la deuxième mesure.

11. Procédé selon l'une quelconque des revendications 1 à 8, **caractérisé en ce que** la deuxième région d'application est réalisée sous forme d'arête coupante (322, 540), qui est tangentielle par rapport au mouvement de pivotement de la deuxième région d'application par rapport à la première région d'application (120, 320), l'arête coupante étant poussée en contact avec la surface périphérique du corps de manière manuelle sur la surface périphérique du corps lors de la première et de la deuxième mesure.

12. Procédé selon la revendication 11, **caractérisé en ce que** l'arête coupante (540) est réalisée sous forme plane ou sous forme de cheminement polygonal.

13. Procédé selon la revendication 11, **caractérisé en ce que** l'arête coupante (540, 322) est courbée, notamment sous forme circulaire ou sous forme d'arc de cercle.

14. Procédé selon l'une quelconque des revendications précédentes, **caractérisé en ce qu'**il est prévu un dispositif de détection, afin de détecter quand la deuxième région d'application (140, 322, 422, 540) est en contact avec la surface périphérique du corps, auquel cas, des valeurs de mesure pour la progression du premier et du deuxième angle de rotation sont enregistrées.

15. Dispositif de mesure pour déterminer l'orientation d'un corps cylindrique (110, 210) par rapport à une direction de référence (10'), avec une sonde de mesure de position (130, 330), qui est calibrée sur la direction de référence et qui est réalisée pour détecter un premier angle de rotation de la sonde autour d'un premier axe fixe (12) et un deuxième angle de rotation de la sonde autour d'un deuxième axe fixe (14), ainsi qu'avec une première région d'application (120, 320, 420) et une deuxième région d'application (140, 322, 422, 540) pour l'application de la sonde sur la surface périphérique du corps, ainsi qu'avec une unité d'analyse,
la première et la deuxième région d'application étant configurées de telle sorte que la première région d'application puisse être amenée, pour une première mesure, après l'application, dans une première position de mesure (E,E') stationnaire pendant cette mesure, tandis que la deuxième région d'application peut être amenée, pendant cette mesure, en contact avec la surface périphérique du corps et peut être pivotée par rapport à la première région d'application,
et la première région d'application pouvant être amenée, pour une deuxième mesure, dans une deuxième position de mesure (Z, Z') stationnaire pendant cette deuxième mesure, qui est décalée dans la direction périphérique par rapport à la première position de mesure de la première région d'application, tandis que pendant cette deuxième mesure, la deuxième région d'application peut également être amenée en contact avec la surface périphérique du corps et peut être pivotée par rapport à la première région d'application et
l'unité d'analyse étant réalisée de telle sorte qu'elle détecte, pendant la première et la deuxième mesure, l'allure du premier et du deuxième angle de rotation et qu'elle détermine, à partir de la comparaison de la progression (MA) du premier et du deuxième angle de rotation obtenue lors de la première mesure, et de la progression (MB) du premier et du deuxième angle de rotation obtenue lors de la deuxième mesure, l'orientation du corps par rapport à la direction de référence.

16. Dispositif selon la revendication 15, **caractérisé en ce que** la première région d'application présente une base (120) pouvant être appliquée de manière détachable sur la surface périphérique du corps, qui peut pivoter par rapport à la sonde (130, 330) autour de deux axes (30, 32) perpendiculaires l'un à l'autre.

17. Dispositif selon la revendication 16, **caractérisé en ce que** le premier axe de pivotement (30) de la base (120) est perpendiculaire à la surface périphérique du corps et le deuxième axe de pivotement (32) de la base est perpendiculaire à la ligne de connexion entre la première et la deuxième région d'application (140, 540).

18. Dispositif selon l'une quelconque des revendications 15 à 17, **caractérisé en ce que** la sonde présente pour chaque axe d'angle de rotation (12, 14, 16) un gyroscope mécanique ou optique.
